# FASCICULE DE BREVET EUROPEEN

(11) **EP 3 530 975 B1**
(45) Date de publication et mention de la délivrance du brevet: **30.03.2022**
(21) Numéro de dépôt: 19157978.8
(22) Date de dépôt: 19.02.2019
(51) Int. Cl.: F16D 23/14, F16C 33/78, F16C 33/64, F16C 19/16

(54) **BUTÉE D'EMBRAYAGE DE VÉHICULE AUTOMOBILE ÉQUIPÉE D'UN DISPOSITIF D'ÉTANCHÉITÉ SANS CONTACT DU CÔTÉ ARRIÈRE DU CHEMIN DE ROULEMENT**
KUPPLUNGSAUSRÜCKLAGER EINES KRAFTFAHRZEUGES MIT EINER BERÜHRUNGSLOSEN DICHTUNGSANORDNUNG AN DER RÜCKSEITE DER LAUFBAHN
CLUTCH RELEASE BEARING OF AN AUTOMOBILE PROVIDED WITH A NON-CONTACT SEALING DEVICE ON THE BACK SIDE OF THE RACEWAY

(30) Priorité: 21.02.2018 FR 1851497
(43) Date de publication de la demande: 28.08.2019
(73) Titulaire: NTN-SNR Roulements, 74000 Annecy (FR)
(72) Inventeur: BERTHIER, Julien, 74410 Saint Jorioz (FR)
(74) Mandataire: Sayettat, Julien Christian

(56) Documents cités:
- EP-A1- 0 773 384
- DE-A1- 19 753 694
- DE-A1- 19 837 578
- DE-A1-102005 008 007
- DE-A1-102014 209 418
- FR-A- 1 534 897
- FR-A5- 2 153 698
- JP-A- 2006 194 307

## Description

L'invention concerne une butée d'embrayage de véhicule automobile, un procédé de réalisation de la bague tournante d'une telle butée, ainsi qu'un système d'actionnement de l'embrayage d'un véhicule automobile comprenant un diaphragme, une telle butée et un dispositif de déplacement axial de ladite butée relativement audit diaphragme.

En particulier, le dispositif de déplacement axial de la butée peut être à commande hydraulique, notamment au moyen d'un piston, comme par exemple les dispositifs dénommés à commande concentrique hydraulique (CSC pour Concentric Slave Cylinder en anglais).

La butée comprend une bague tournante et une bague fixe pourvues chacune d'une piste de roulement formant entre elles un chemin de roulement dans lequel des corps roulants sont disposés pour guider la rotation de ladite bague tournante.

En particulier, notamment pour des raisons d'encombrement du dispositif à commande hydraulique, les butées d'embrayage utilisées dans de tels systèmes comprennent une bague extérieure tournante autour d'une bague intérieure fixe en rotation.

Dans de tels systèmes, la bague intérieure est montée sur le dispositif de déplacement, notamment par l'intermédiaire d'un support de montage, afin d'être déplacée en translation axiale par l'intermédiaire dudit dispositif. En particulier, la bague intérieure présente une portée radiale qui est en appui axial sur le support de montage par l'intermédiaire d'un moyen d'autocentrage apte à générer un effort d'autocentrage entre ledit support et la butée.

Par ailleurs, la bague extérieure comprend une portée d'actionnement par appui sur le diaphragme entre une position d'embrayage et une position de débrayage, ladite portée s'étendant intérieurement selon une direction sensiblement radiale du côté avant de la piste de roulement de ladite bague extérieure.

Pour empêcher d'une part les fuites de lubrifiant présent dans le chemin de roulement et d'autre part la contamination dudit chemin avec des polluants extérieurs, il est connu de prévoir un dispositif d'étanchéité sur au moins un côté dudit chemin, notamment du côté arrière qui est opposé à la portée d'actionnement.

En outre, dans certaines intégrations des butées d'embrayage, il est nécessaire d'utiliser des corps roulants de petite taille, notamment sous forme de billes de diamètre inférieur à 4 mm, afin de satisfaire à des exigences de compacité pour ladite butée d'embrayage.

Toutefois, dans de telles applications, l'étanchéification de la butée d'embrayage pose problème. En effet, la compacité résultant de la petite dimension des corps roulants réduit l'espace radial disponible pour l'installation d'un dispositif d'étanchéité, notamment du côté arrière entre la bague tournante et la bague fixe.

On connaît du document DE-198 37 578 une butée selon le préambule de la revendication 1, du document FR-1 534 897 une telle butée dans laquelle la bague tournante n'est pas réalisée d'une seule pièce et du document DE-197 53 694 un procédé de rectification de bagues formées par emboutissage.

L'invention vise à résoudre les problèmes de l'art antérieur en proposant notamment une butée d'embrayage dans laquelle l'étanchéité du chemin de roulement est assurée, notamment du côté arrière opposé à la portée d'actionnement, et ce notamment en relation avec une butée comportant des corps roulants de petite dimension.

A cet effet, et selon un premier aspect, l'invention propose une butée d'embrayage de véhicule automobile comprenant une bague tournante et une bague fixe pourvues chacune d'une piste de roulement formant entre elles un chemin de roulement dans lequel des corps roulants sont disposés pour guider la rotation relative desdites bagues, la bague tournante présentant une portée destinée à l'actionnement du diaphragme de l'embrayage, ladite portée s'étendant intérieurement selon une direction sensiblement radiale du côté avant de la piste de roulement de la bague tournante, la bague tournante présentant une portée d'étanchéité formée du côté arrière de la piste de roulement, ladite portée d'étanchéité s'étendant intérieurement selon une direction sensiblement radiale en formant un jeu réduit avec une portée complémentaire de la bague fixe, au moins la bague tournante étant réalisée en une seule pièce et la bague fixe présentant une paroi arrière formant la portée complémentaire et s'étendant sensiblement axialement et en regard radial de laquelle la portée d'étanchéité est disposée pour former le jeu réduit, ledit jeu réduit étant formé à l'interface entre un bord intérieur de la portée d'étanchéité et la portée complémentaire de la bague fixe.

Selon un deuxième aspect, l'invention propose un procédé de réalisation de la bague tournante d'une telle butée d'embrayage, dans lequel un flan de matériau est embouti pour réaliser la géométrie de ladite bague, la piste de roulement et le bord intérieur de la portée d'étanchéité étant ensuite rectifiés.

Selon un troisième aspect, l'invention propose un système d'actionnement de l'embrayage d'un véhicule automobile comprenant un diaphragme, ledit système comprenant une telle butée qui est montée sur un dispositif de déplacement axial de ladite butée entre une position d'embrayage dans laquelle la portée d'actionnement est disposée contre le diaphragme et une position de débrayage dans laquelle ladite portée d'actionnement appuie sur ledit diaphragme.

D'autres objets et avantages de l'invention apparaîtront dans la description qui suit, faite en référence aux figures annexées, dans lesquelles :
- la figure 1 est une vue partielle en coupe longitudinale d'une butée d'embrayage selon un mode de réalisation de l'invention ;
- la figure 2 est une vue partielle en coupe longitudinale de l'étape de rectification de la bague tournante de la butée de la figure 1 ;
- la figure 3 est une vue partielle en coupe longitudinale d'une étape d'un procédé de montage d'un dispositif d'étanchéité à l'intérieur de la bague tournante de la figure 2 ;
- les figures 4a et 4b sont des vues en perspective de respectivement une autre étape du procédé de montage de la figure 3.

En relation avec les figures, on décrit ci-dessous un palier à roulement, et plus particulièrement une butée d'embrayage de véhicule automobile, ladite butée étant notamment destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial de la butée entre une position d'embrayage et la position de débrayage.

La butée d'embrayage comprend une bague tournante 1 et une bague fixe 2, chacune desdites bagues étant pourvues d'une piste de roulement 3, 4 formant entre elles un chemin de roulement à contact oblique dans lequel des corps roulants 5 montés dans une cage de rétention 6 sont disposés pour guider la rotation de ladite bague tournante par rapport à ladite bague fixe.

Dans le mode de réalisation représenté, la bague extérieure 1 est tournante autour d'une bague intérieure 2 qui est fixe en rotation, lesdites bagues étant réalisées en tôle emboutie pour présenter chacune une piste de roulement 3, 4. En particulier, au moins la bague tournante 1 et, dans le mode de réalisation représenté chacune des bagues 1, 2, est réalisée en une seule pièce.

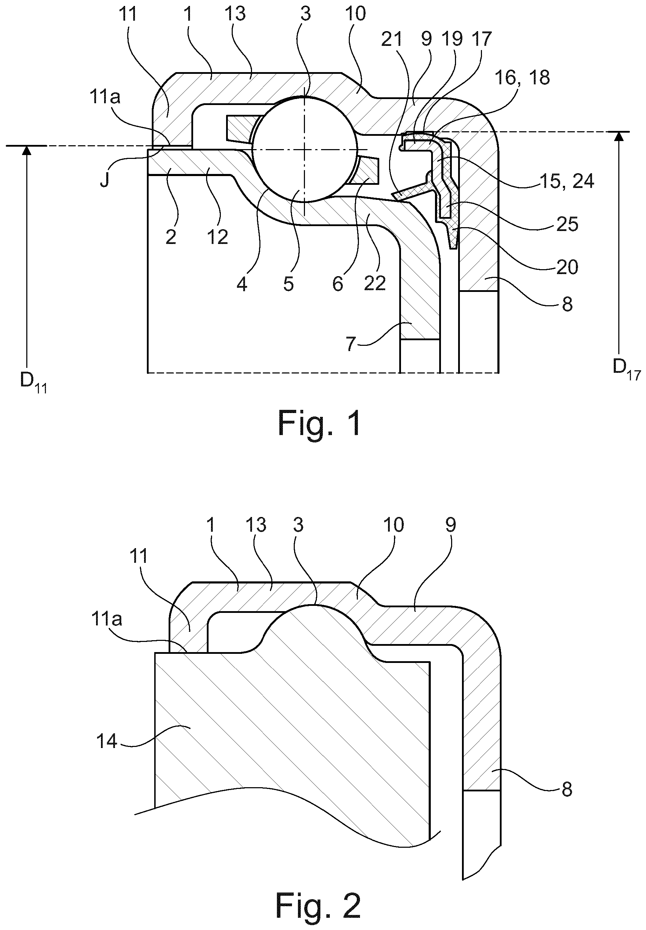

Dans la description, les termes de positionnement dans l'espace sont pris en référence à l'axe de rotation de la butée (horizontal sur la figure 1 qui montre un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens de déplacement de la butée vers la position de débrayage, à savoir à droite sur la figure 1 pour « avant » et à gauche pour « arrière ».

La bague 2 fixe en rotation est destinée à être déplacée en translation axiale par l'intermédiaire du dispositif de déplacement. Pour ce faire, la bague intérieure 2 présente une portée avant 7 de montage sur le dispositif de déplacement axial.

En particulier, la portée avant 7 peut être disposée autour d'un support (non représenté) de montage sur le dispositif de déplacement axial, par exemple sur la tige d'un piston, ou en coulissement sur un arbre du système d'actionnement. Par ailleurs, la portée avant 7 peut être montée en appui axial sur un tel support par l'intermédiaire d'un moyen d'autocentrage, par exemple une rondelle élastique de type « Belleville », qui est apte à générer un effort d'autocentrage entre le support et la butée.

La bague extérieure 1 comprend une portée 8 destinée à l'actionnement du diaphragme de l'embrayage, ladite portée s'étendant intérieurement selon une direction sensiblement radiale du côté avant de la piste de roulement 3 de ladite bague extérieure. Ainsi, en position d'embrayage, la portée d'actionnement 8 peut être disposée contre le diaphragme sans exercer un effort significatif d'appui pour le débrayage et, en position de débrayage, la portée d'actionnement 8 appuie sur ledit diaphragme.

Le chemin de roulement réalisé entre les pistes 3, 4 est à contact oblique dans le sens d'application de l'effort de déplacement de la butée en position de débrayage. En particulier, la bague extérieure 1 présente, de l'avant vers l'arrière, la portée d'actionnement 8, une paroi avant 9 sensiblement axiale et un collet 10 de la piste de roulement 3 sur lequel les corps roulants 5 sont retenus axialement.

Par ailleurs, des corps roulants 5 formés de billes sont disposés pour guider la rotation de la bague extérieure 1 par rapport à la bague intérieure 2 et transmettre les efforts exercés sur chacune des bagues 1, 2, lesdites billes étant équiréparties dans le chemin de roulement par l'intermédiaire de la cage 6.

En particulier, les billes 5 présentent un diamètre réduit, notamment inférieur à 4 mm, et plus particulièrement égal à environ 3,969 mm, afin de réduire l'encombrement de la butée.

Pour assurer l'étanchéité du côté arrière du chemin de roulement, notamment dans le cas de billes 5 avec un diamètre réduit telles que susmentionnées, la bague extérieure 1 présente une portée d'étanchéité 11 formée sur le côté arrière de la piste de roulement 3, ladite portée d'étanchéité s'étendant intérieurement selon une direction sensiblement radiale en formant un jeu réduit J avec une portée complémentaire 12 de la bague intérieure 2.

Ainsi, la portée d'étanchéité 11 permet de s'affranchir du montage d'un dispositif d'étanchéité rapporté sur le côté arrière du chemin de roulement, un tel montage pouvant s'avérer difficile, voire impossible, dans le cas d'une butée présentant des billes 5 de petit diamètre, du fait du manque d'espace radial nécessaire pour ledit montage.

En relation avec les figures, la bague extérieure 1 présente successivement de l'arrière vers l'avant, la portée d'étanchéité 11, une paroi arrière 13 sensiblement axiale et la piste de roulement 3. De façon avantageuse, la partie coudée intérieurement formée par la portée d'étanchéité 11 dans la continuité de la paroi arrière 13 et de la piste de roulement 3 permet, lors de la rotation de la bague extérieure 1, d'éviter l'éjection du lubrifiant présent dans le chemin de roulement, contribuant ainsi à la fonction d'étanchéité.

La bague intérieure 2 présente une paroi arrière 12 s'étendant sensiblement axialement et en regard radial de laquelle la portée d'étanchéité 11 est disposée pour former le jeu réduit J.

En particulier, le jeu réduit J est formé à l'interface entre un bord intérieur 11a de la portée d'étanchéité 11 et la portée complémentaire 12 de la bague intérieure 2. En outre, le jeu réduit J présente une dimension radiale inférieure à 0,2 mm, notamment en étant de l'ordre de 0,1 mm.

Pour garantir la bonne réalisation d'un jeu d'étanchéité J aussi réduit, on peut prévoir un procédé dans lequel, de façon connue, un flan de matériau, notamment en tôle métallique, est embouti pour réaliser la géométrie de ladite bague.

Ensuite, le procédé prévoit de rectifier, notamment au moyen d'un outil 14 tel que représenté sur la figure 2, d'une part la piste de roulement 3, afin de faciliter la rotation des corps roulants 5 sur elle, mais aussi le bord intérieur 11a de la portée d'étanchéité 11.

En effet, la rectification de surface au moyen d'un outil 14 adapté, notamment une meule, permet d'ajuster l'état de ladite surface, notamment sa régularité, de manière très précise, comme cela est nécessaire pour la piste de roulement 3 des corps roulants 5. Et, le fait de réaliser une telle rectification sur la portée d'étanchéité 11 permet de garantir l'obtention précise du jeu J, notamment à une valeur très réduite permettant d'améliorer l'étanchéité du côté arrière du chemin de roulement.

De façon avantageuse, comme représenté sur la figure 2, le procédé prévoit de rectifier la piste de roulement 3 et la portée d'étanchéité 11 concomitamment au moyen d'un même outil 14, ce qui permet de simplifier la réalisation de la bague extérieure 1. En outre, la rectification simultanée permet de corriger les éventuelles erreurs géométriques liées à l'emboutissage, et de lier la tenue du jeu J à la géométrie de pistes 3, 4, lesquelles positionnent les bagues 1, 2 l'une par rapport à l'autre via les corps roulants 5.

En relation avec le mode de réalisation représenté sur les figures, la butée est équipée d'un dispositif 15 pour assurer l'étanchéité du côté avant du chemin de roulement, afin d'améliorer l'étanchéité globale dudit chemin.

Sur la figure 1, le dispositif d'étanchéité 15 s'étend au moins en partie entre les bagues 1, 2 en étant disposé axialement en regard des corps roulants 5. Le dispositif d'étanchéité 15 comprend une armature 16, par exemple réalisée en tôle emboutie, qui est fixée sur une portée avant 17 de la bague extérieure 1.

En particulier, l'armature 16 est équipée d'une couronne extérieure 18 dont la dimension extérieure permet son emmanchement dans la portée avant 17, ladite couronne extérieure présentant une portée axiale extérieure 19 pour ledit emmanchement.

L'armature 16 porte un élément d'étanchéité 20 qui peut être réalisé en matériau souple, par exemple en élastomère, et qui peut être fixé à ladite armature notamment par surmoulage.

L'élément d'étanchéité 20 présente au moins une lèvre 21 en interférence d'étanchéité avec une portée complémentaire 22 de la bague intérieure 2, notamment une portée 22 s'étendant sensiblement axialement directement en arrière de la portée 7 de montage sur le dispositif de déplacement de la butée. En particulier, la lèvre 21 peut être en contact frottant sur la portée complémentaire 22, comme représenté sur la figure 1, ou former un jeu réduit d'étanchéité avec ladite portée complémentaire.

Sur la figure 1, l'armature 16 est fixée sur une portée avant 17 qui est formée sur l'intérieur de la paroi avant 9 sensiblement axiale s'étendant directement à l'arrière de la portée d'actionnement 8. En particulier, la portée avant 17 peut être formée par rectification lors du procédé de réalisation de la bague extérieure 1, notamment concomitamment et au moyen du même outil 14 que la piste de roulement 3 et la portée d'étanchéité 11.

De façon avantageuse, l'élément d'étanchéité 20 est disposé sur l'avant de l'armature 16 et la portée avant 17 s'étend au plus près de la portée d'actionnement 8, de sorte que ledit élément d'étanchéité 20 peut être disposé en appui sur l'arrière de ladite portée d'actionnement. En outre, l'élément d'étanchéité 20 est disposé sur la portée axiale extérieure 19 pour étanchéifier l'emmanchement.

Du fait de la géométrie de la bague extérieure 1, la portée avant 17 de fixation du dispositif d'étanchéité 15 présente une dimension intérieure D₁₇ qui est supérieure à la dimension intérieure D₁₁ délimitée par le bord intérieur 11a de la portée d'étanchéité 11, ce qui contraint le montage du dispositif d'étanchéité 15 dans la bague extérieure 1.

Pour pallier cette contrainte, on décrit ci-dessous un procédé de montage du dispositif d'étanchéité 15 à l'intérieur de la bague extérieure 1.

Dans le mode de réalisation représenté, ce procédé de montage s'applique à une butée d'embrayage. Toutefois, ce procédé n'est pas limité à ce cas particulier et peut s'appliquer de manière plus générale au montage d'un dispositif d'étanchéité 15 à l'intérieur d'une bague de palier à roulement présentant une portée arrière 11 radiale et une portée avant 17 pour la fixation dudit dispositif d'étanchéité avec une dimension intérieure D₁₇ supérieure à la dimension intérieure D₁₁ de ladite portée arrière.

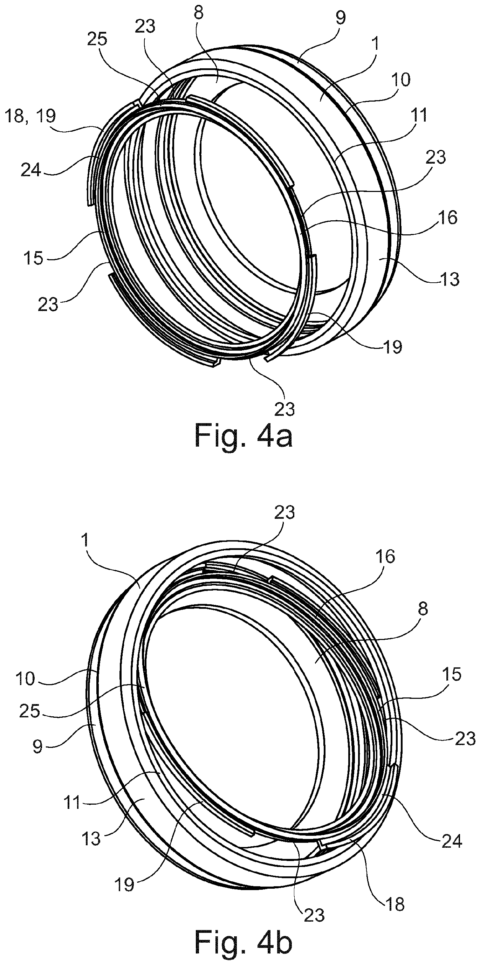

En relation avec les figures 4a et 4b, le procédé prévoit d'équiper l'armature 16 d'une couronne extérieure 18 d'emmanchement qui présente au moins deux évidements 23 diamétralement opposés en définissant une dimension réduite qui est inférieure à la dimension intérieure D₁₁ de la portée arrière 11, puis d'incliner relativement le dispositif d'étanchéité 15 et la bague extérieure 1 en disposant les évidements 23 en regard axial de la portée arrière 11, comme représenté sur la figure 4b, afin de permettre le passage dudit dispositif d'étanchéité dans ladite bague extérieure par passage de ladite portée arrière au travers desdits évidements.

Dans le mode de réalisation décrit, les bagues 1, 2 et le dispositif d'étanchéité 15, et par conséquent leurs différentes portées, couronnes et parois, présentent une géométrie de révolution autour de l'axe de rotation de la butée. De ce fait, les dimensions « intérieures » respectivement « extérieures » utilisées dans la description désignent les diamètres dans lesquels ces géométries sont « inscrites » respectivement « circonscrites ».

De façon avantageuse, les évidements 23 présentent chacun une dimension angulaire comprise entre 15° et 45°, notamment en étant comprise entre 25° et 40°, ce qui permet de faciliter le passage de la portée arrière 11 au travers desdits évidements. En outre, dans le mode de réalisation représenté, la couronne extérieure 18 présente deux jeux de deux évidements 23 diamétralement opposés.

Sur les figures, la couronne extérieure 18 présente une portée radiale 24 qui s'étend intérieurement depuis la portée axiale 19 d'emmanchement et qui surmonte une couronne intérieure 25 continue, l'élément d'étanchéité 20 étant disposé sur l'avant de ladite portée radiale et de ladite couronne intérieure pour venir en appui à l'arrière de la portée d'actionnement 8. En particulier, comme représenté sur les figures 4a et 4b, les évidements 23 sont formés au travers de la portée axiale extérieure 19 et de la portée radiale intérieure 24, et présentent chacun une base formée sur la couronne intérieure 25.

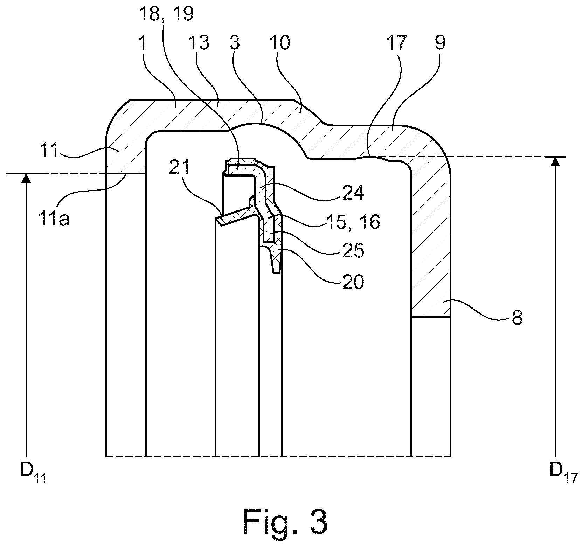

Après l'inclinaison relative du dispositif d'étanchéité 15 et de la bague extérieure 1, le procédé de montage prévoit de déplacer relativement ledit dispositif et ladite bague pour faire passer la portée d'étanchéité 11 au travers des évidements 23 puis, après ledit passage, disposer de façon coaxiale la couronne extérieure 18 et la portée avant 17, comme représenté sur la figure 3.

Enfin, le procédé prévoit un déplacement axial relatif du dispositif d'étanchéité 15 dans la bague extérieure 1 pour réaliser l'emmanchement de la couronne extérieure 18 dans la portée avant 17, et ainsi finaliser le montage dudit dispositif d'étanchéité dans ladite bague extérieure.

## Revendications

1. Butée d'embrayage de véhicule automobile comprenant une bague tournante (1) et une bague fixe (2) pourvues chacune d'une piste de roulement (3, 4) formant entre elles un chemin de roulement dans lequel des corps roulants (5) sont disposés pour guider la rotation relative desdites bagues, la bague tournante (1) présentant une portée (8) destinée à l'actionnement du diaphragme de l'embrayage, ladite portée s'étendant intérieurement selon une direction sensiblement radiale du côté avant de la piste de roulement (3) de la bague tournante (1), la bague tournante (1) présentant une portée d'étanchéité (11) formée du côté arrière de la piste de roulement (3), ladite portée d'étanchéité s'étendant intérieurement selon une direction sensiblement radiale en formant un jeu réduit (J) avec une portée complémentaire (12) de la bague fixe (2), au moins la bague tournante (1) étant réalisée en une seule pièce et ladite butée étant **caractérisée en ce que** la bague fixe (2) présente une paroi arrière (12) formant la portée complémentaire (12) et s'étendant sensiblement axialement et en regard radial de laquelle la portée d'étanchéité (11) est disposée pour former le jeu réduit (J), ledit jeu réduit (J) étant formé à l'interface entre un bord intérieur (11a) de la portée d'étanchéité (11) et la portée complémentaire (12) de la bague fixe (2).

2. Butée d'embrayage selon la revendication 1, **caractérisée en ce que** la bague tournante (1) présente successivement de l'avant vers l'arrière, la portée d'actionnement (8), une paroi avant (9) sensiblement axiale et un collet (10) de la piste de roulement (3) sur lequel les corps roulants (5) sont retenus axialement.

3. Butée d'embrayage selon l'une des revendications 1 ou 2, **caractérisée en ce que** la bague tournante (1) présente successivement de l'arrière vers l'avant, la portée d'étanchéité (11), une paroi arrière (13) sensiblement axiale et la piste de roulement (3).

4. Butée d'embrayage selon l'une quelconque des revendications 1 à 3, **caractérisée en ce que** la bague fixe (2) présente une portée avant (7) de montage sur un dispositif de déplacement axial de ladite butée.

5. Butée d'embrayage selon l'une quelconque des revendications 1 à 4, **caractérisée en ce que** le jeu réduit (J) présente une dimension radiale inférieure à 0,2 mm, notamment en étant de l'ordre de 0,1 mm.

6. Butée d'embrayage selon l'une quelconque des revendications 1 à 5, **caractérisée en ce que** la bague extérieure (1) est tournante autour d'une bague intérieure (2) qui est fixe en rotation.

7. Butée d'embrayage selon l'une quelconque des revendications 1 à 6, **caractérisée en ce que** la bague tournante (1) est équipée d'un dispositif d'étanchéité (15) comprenant une armature (16) fixée sur une portée avant (17) de ladite bague tournante, ladite armature portant un élément d'étanchéité (20) présentant au moins une lèvre (21) en interférence d'étanchéité avec une portée complémentaire (22) de la bague fixe (2).

8. Butée d'embrayage selon la revendication 7, **caractérisée en ce que** l'élément d'étanchéité (20) est en appui sur l'arrière de la portée d'actionnement (8).

9. Butée d'embrayage selon l'une quelconque des revendications 1 à 8, **caractérisée en ce que** les corps roulants (5) sont formés de billes présentant un diamètre inférieur à 4 mm.

10. Procédé de réalisation de la bague tournante (1) d'une butée d'embrayage selon l'une quelconque des revendications 1 à 9, dans lequel un flan de matériau est embouti pour réaliser la géométrie de ladite bague, la piste de roulement (3) et le bord intérieur (11a) de la portée d'étanchéité (11) étant ensuite rectifiés.

11. Procédé selon la revendication 10, **caractérisé en ce que** la piste de roulement (3) et le bord intérieur (11a) de la portée d'étanchéité (11) sont rectifiés concomitamment au moyen d'une même outil (14).

12. Système d'actionnement de l'embrayage d'un véhicule automobile comprenant un diaphragme, ledit système comprenant une butée selon l'une quelconque des revendications 1 à 9 qui est montée sur un dispositif de déplacement axial de ladite butée entre une position d'embrayage dans laquelle la portée d'actionnement (8) est disposée contre le diaphragme et une position de débrayage dans laquelle ladite portée d'actionnement appuie sur ledit diaphragme.

## Patentansprüche

1. Kupplungsausrücklager eines Kraftfahrzeugs, umfassend einen drehbaren Ring (1) und einen festen Ring (2), die beide mit einem Laufweg (3, 4) versehen sind, der zwischen ihnen eine Laufbahn bildet, auf der Rollkörper (5) angeordnet sind, um die relative Rotation der Ringe zu lenken, wobei der drehbare Ring (1) eine Auflagefläche (8) aufweist, die bestimmt ist, die Membran der Kupplung zu betätigen, wobei sich die Auflagefläche innen gemäß einer etwa radialen Richtung an der Vorderseite des Laufwegs (3) des drehbaren Rings (1) erstreckt, wobei der drehbare Ring (1) eine Dichtungs-Auflagefläche (11) aufweist, die an der Rückseite des Laufwegs (3) ausgebildet ist, wobei sich die Dichtungs-Auflagefläche innen gemäß einer etwa radialen Richtung erstreckt und dabei ein reduziertes Spiel (J) mit einer komplementären Auflagefläche (12) des festen Rings (2) bildet, wobei mindestens der drehbare Ring (1) in einem einzigen Teil hergestellt ist und das Ausrücklager **dadurch gekennzeichnet ist, dass** der feste Ring (2) eine hintere Wand (12) aufweist, die die komplementäre Auflagefläche (12) bildet und sich etwa axial erstreckt und zu der die Dichtungs-Auflagefläche (11) radial zugewandt angeordnet ist, um das reduzierte Spiel (J) zu bilden, wobei das reduzierte Spiel (J) an der Schnittstelle zwischen einem unteren Rand (11a) der Dichtungs-Auflagefläche (11) und der komplementären Auflagefläche (12) des festen Rings (2) gebildet ist.

2. Kupplungsausrücklager nach Anspruch 1, **dadurch gekennzeichnet, dass** der drehbare Ring (1) nacheinander von vorn nach hinten die Betätigungs-Auflagefläche (8), eine etwa axiale vordere Wand (9) und einen Kragen (10) des Laufwegs (3) aufweist, auf dem die Rollkörper (5) axial gehalten werden.

3. Kupplungsausrücklager nach einem der Ansprüche 1 oder 2, **dadurch gekennzeichnet, dass** der drehbare Ring (1) nacheinander von hinten nach vorn die Dichtungs-Auflagefläche (11), eine etwa axiale hintere Wand (13) und den Laufweg (3) aufweist.

4. Kupplungsausrücklager nach einem der Ansprüche 1 bis 3, **dadurch gekennzeichnet, dass** der feste Ring (2) eine vorderen Montageauflagefläche (7) auf einer Axialverlagerungsvorrichtung des Ausrücklagers aufweist.

5. Kupplungsausrücklager nach einem der Ansprüche 1 bis 4, **dadurch gekennzeichnet, dass** das reduzierte Spiel (J) eine radiale Abmessung unter 0,2 mm, insbesondere in der Größenordnung von 0,1 mm, aufweist.

6. Kupplungsausrücklager nach einem der Ansprüche 1 bis 5, **dadurch gekennzeichnet, dass** der äußere Ring (1) um einen inneren Ring (2) dreht, der rotatorisch fest ist.

7. Kupplungsausrücklager nach einem der Ansprüche 1 bis 6, **dadurch gekennzeichnet, dass** der drehbare Ring (1) mit einer Dichtungsvorrichtung (15) ausgestattet ist, die eine Armierung (16) umfasst, die auf einer vorderen Auflagefläche (17) des drehbaren Rings befestigt ist, wobei die Armierung ein Dichtungselement (20) trägt, das mindestens eine Lippe (21) in Dichtungsinterferenz mit einer komplementären Auflagefläche (22) des festen Rings (2) aufweist.

8. Kupplungsausrücklager nach Anspruch 7, **dadurch gekennzeichnet, dass** sich das Dichtungselement (20) auf der Rückseite der Betätigungs-Auflagefläche (8) abstützt.

9. Kupplungsausrücklager nach einem der Ansprüche 1 bis 8, **dadurch gekennzeichnet, dass** die Rollkörper (5) von Kugeln gebildet sind, die einen Durchmesser von unter 4 mm aufweisen.

10. Verfahren zur Herstellung des drehbaren Rings (1) eines Kupplungsausrücklagers nach einem der Ansprüche 1 bis 9, bei dem ein Materialzuschnitt tiefgezogen wird, um die Geometrie des Rings herzustellen, wobei der Laufweg (3) und der innere Rand (11a) der Dichtungs-Auflagefläche (11) danach bearbeitet werden.

11. Verfahren nach Anspruch 10, **dadurch gekennzeichnet, dass** der Laufweg (3) und der innere Rand (11a) der Dichtungs-Auflagefläche (11) zusammen mit demselben Werkzeug (14) bearbeitet werden.

12. System zur Betätigung der Kupplung eines Kraftfahrzeugs, umfassend eine Membran, wobei das System ein Ausrücklager nach einem der Ansprüche 1 bis 9 umfasst, das auf einer Axialverlagerungsvorrichtung des Ausrücklagers zwischen einer Kupplungsposition, in welcher die Betätigungs-Auflagefläche (8) an der Membran angeordnet ist, und einer Auskupplungsposition, in welcher sich die Auflagefläche auf der Membran abstützt, angebracht ist.

## Claims

1. Motor vehicle clutch release bearing comprising a rotating ring (1) and a fixed ring (2) each provided with a rolling track (3, 4) forming between them a raceway in which rolling elements (5) are arranged to guide the relative rotation of said rings, the rotating ring (1) having a bearing surface (8) for actuating the diaphragm of the clutch, said bearing surface extending inwardly in a substantially radial direction on the front side of the rolling track (3) of the rotating ring (1), the rotating ring (1) having a sealing bearing surface (11) formed on the rear side of the rolling track (3), said sealing surface extending inwardly along a substantially radial direction while forming a reduced clearance (J) with a complementary bearing surface (12) of the fixed ring (2), at least the rotation ring (1) being made in one piece and said release bearing being **characterized in that** the fixed ring (2) has a rear wall (12) forming the complementary bearing surface (12) and extending substantially axially and radially opposite that where the sealing bearing surface (11) is arranged to form the reduced clearance (J), said reduced clearance (J) being formed at the interface of an inner edge (11a) of the sealing bearing surface (11) and the complementary bearing surface (12) of the inner ring (2).

2. A clutch release bearing according to Claim 1, **characterized in that** the rotating ring (1) has successively from front to rear, the actuating bearing surface (8), a substantially axial front wall (9) and a collar (10) of the rolling track (3) on which the rolling elements (5) are retained axially.

3. A clutch release bearing according to one of Claims 1 or 2, **characterized in that** the rotating ring (1) has successively from the rear to the front, the sealing bearing surface (11), a substantially axial rear wall (13) and the rolling track (3).

4. A clutch release bearing according to any one of Claims 1 to 3, **characterized in that** the fixed ring (2) has a front bearing surface (7) for mounting on a device for axial movement of said release bearing.

5. A clutch release bearing according to any one of Claims 1 to 4, **characterized in that** the reduced clearance (J) has a radial dimension less than 0.2 mm, in particular being on the order of 0.1 mm.

6. A clutch release bearing according to any one of Claims 1 to 5, **characterized in that** the outer ring (1) is rotatable about an inner ring (2) which is fixed in rotation.

7. A clutch release bearing according to any one of Claims 1 to 6, **characterized in that** the rotating ring (1) is equipped with a sealing device (15) comprising a frame (16) fastened on a front bearing surface (17) of said rotating ring, said frame bearing a sealing element (20) having at least one lip (21) in sealing interference with a complementary bearing surface (22) of the fixed ring (2).

8. A clutch release bearing according to the claim 7, **characterized in that** the sealing element (20) is in abutment on the rear of the actuating bearing surface (8).

9. A clutch release bearing according to any one of Claims 1 to 8, **characterized in that** the rolling elements (5) are formed of balls having a diameter less than 4 mm.

10. A method of producing the rotating ring (1) of a clutch release bearing according to any one of claims 1 to 9, wherein a plate of material is stamped to achieve the geometry of said ring, the rolling track (3) and the inner edge (11a) of the sealing bearing surface (11) then being ground.

11. The method of claim 10, **characterized in that** the rolling track (3) and the inner edge (11a) of the sealing surface (11) are ground concurrently by means of the same tool (14).

12. A clutch actuating system of a motor vehicle comprising a diaphragm, said system comprising a release bearing according to any one of claims 1 to 9 which is mounted on a device for axial movement of said release bearing between a position of clutching in which the actuating bearing surface (8) is arranged against the diaphragm and a position of declutching in which said actuating bearing surface pushes on said diaphragm.
